# EUROPÄISCHE PATENTSCHRIFT

(11) **EP 4 375 160 B1**
(45) Veröffentlichungstag und Bekanntmachung des Hinweises auf die Patenterteilung: **07.01.2026**
(21) Anmeldenummer: 22209829.5
(22) Anmeldetag: 28.11.2022
(51) Int. Cl.: B62B 5/00

(54) **ROLLTRANSPORTEINHEIT**
ROLLER TRANSPORT UNIT
UNITÉ DE TRANSPORT À ROULEAUX

(43) Veröffentlichungstag der Anmeldung: 29.05.2024
(73) Patentinhaber: Koch, Uwe, 22926 Ahrensburg (DE)
(72) Erfinder: Koch, Uwe, 22926 Ahrensburg (DE)
(74) Vertreter: Raffay & Fleck

(56) Entgegenhaltungen:
- EP-A1- 3 670 292
- EP-A1- 3 778 350
- DE-A1- 102013 106 730
- DE-U1- 202014 100 202
- US-A- 3 031 207
- US-A1- 2006 053 725

## Beschreibung

Die Erfindung betrifft eine Rolltransporteinheit für, insbesondere in Kisten aufgestapelte, Güter zur Anwendung in der Güterlogistik. Sie betrifft ferner ein System zum Transportieren, Umschlagen und/oder Lagern von Gütern mit einer derartigen Rolltransporteinheit.

In der Logistik ist es bekannt, Waren oder andere Güter zusammengefasst in Gebinden zu transportieren oder zu lagern, wobei hierfür häufig Transportkisten oder auch sogenannte Stiegen Verwendung finden. In solchen Transportkisten oder Stiegen sind dabei einzelne Güter bzw. Waren angeordnet, zum Beispiel Lebensmittel wie Obst und Gemüse, frische Backwaren oder aber zur weiteren Verarbeitung vorgefertigte Teigwarenrohlinge, sogenannte Teiglinge. Solche Teiglinge sind aus fertig produziertem Teig vorgeformte Brotlaibe oder Brötchen, die in einem Backraum noch fertig zu backen sind. Sie werden in typischen Backbetrieben an einem zentralen Fertigungsort vorgefertigt, anschließend - gekühlt oder ungekühlt - in die Filialen transportiert, wo der abschließende Backvorgang durchgeführt wird, um dann vor Ort die dort frisch gebackenen Backwaren den Kunden präsentieren und zum Verkauf anbieten zu können.

Für den Transport solcher in Kisten abgepackter Güter werden bekanntermaßen Rolltransporteinheiten eingesetzt, die eine Grundplatte aufweisen, mit unterseitig angeordneten Rädern, wobei auf der Grundplatte die mit Gütern gefüllten Kisten aufgestapelt werden können. Die Kisten werden gegen ein seitliches herunterfallen gesichert, zum Beispiel mit Spannriemen oder seitlich an der Rolltransporteinheit angeordneten Gittern oder vergleichbaren Strukturen, und der so auf der Rolltransporteinheit gebildete Kistenstapel wird mithilfe der Rolltransporteinheit bewegt, kann so zum Beispiel durch Rollen über einen Untergrund aus einem Distributionszentrum in ein Transportfahrzeug verbracht werden, von einem Transportfahrzeug zu einer Zieldestination geschoben werden und dergleichen.

Die üblichen Rolltransporteinheiten sind dabei typischerweise so bemessen, bzw. die verwendeten Transportkisten sind derart gebildet und auf die Transporteinheiten abgestimmt, dass nicht lediglich eine Kiste auf der Grundplatte abgestellt werden kann, sondern zwei neben andere angeordnete Kisten, sodass auf der Grundplatte einer Rolltransporteinheit zwei nebeneinander aufgestellte Kistenstapel angeordnet werden können.

Ein Problem beim Gebrauch solcher Rolltransporteinheiten ist der Umstand, dass in den Laderäumen der verwendeten Transportfahrzeuge regelmäßig nur ein begrenzter Aufstellraum, insbesondere eine begrenzte Grundfläche, zur Verfügung steht, um darin Rolltransporteinheiten mit darauf aufgebrachten Kistenstapeln aufzunehmen und zu transportieren. Entsprechend ist man bestrebt, die Rolltransporteinheiten in ihrer Breite und Länge möglichst wenig über die Abmessungen der Grundplatte vorstehen zu lassen, wobei die Abmessungen der Grundplatte idealerweise auf die Maße der zu transportierenden Kisten abgestimmt sind. Auch diese Maße richten sich dabei nach den üblicherweise in der Logistik eingesetzten Transportsystemen, orientieren sich in Deutschland und anderen europäischen Ländern insbesondere an den Abmessungen der sogenannten Europalette, die im Logistikwesen dieser Länder einen üblichen Standard darstellt, an dem sich die Dimensionierung der Grundflächen der verschiedensten weiteren Einheiten anlehnen, bzw. daraus ableiten, so zum Beispiel Ladeflächen von Lasttransportfahrzeugen, Grundflächenabmessungen von Transportkisten und dergleichen.

Ein System aus individuell gestalteten Lastträgern, die zu einer zusammengesetzten Transporteinheit verbunden werden können, ist in der US 2006/0053725 A1 offenbart. Dort sind einzelne Lastträger an Seitenkanten mit sich abwechselnden Schwalbenschwanzvorsprüngen und Schwalbenschwanzausnehmungen versehen, über die die Lastträger dann zum Bilden einer durchgehenden einheitlichen Gesamtauflagefläche jeweils paarweise oder auch in größeren Verbünden puzzleartig zusammengefügt werden können.

Die EP 3 778 350 A1 offenbart eine Möglichkeit, einzelne Transportplattformen mittels Verbindungselementen miteinander zu verbinden. Dazu können in Aufnahmeöffnungen in den Auflageflächen nebeneinander platzierter Transportplattformen jeweils ein herabragender Schenkel eines zwei solche Schenkel aufweisenden, brückenartigen Verbindungselements eingeführt werden. Rastmittel fahren dann in Öffnungen in den Schenkeln ein und sichern die Verbindung.

In der DE 20 2014 100 202 U1, in der eine Vorrichtung zum Transportieren von Behälterbehandlungsaggregaten beschrieben ist, sind unterschiedlich geformte Verbindungselemente gezeigt, auch solche, die zu einem freien Ende hin verjüngt ausgebildet sind.

Ein weiteres System zum Transportieren, Umschlagen und/oder Lagern von Waren, bei dem Transportkisten auf Rollwagen raumsparend nicht nur angeordnet, sondern auch, mithilfe von Riegelstangen, gesichert werden können, ist in der EP 3 670 292 A1 offenbart. Dieses System bietet in der Logistik einen erheblichen Vorteil, insbesondere in der Distribution von Waren zu - häufig in Arealen mit beschränkten Zufahrtsmöglichkeiten gelegenen - Abnahmestellen mit geringen Abnahmemengen und vergleichsweise geringem Stauraum. Denn so können auch in Transportfahrzeuge mit vergleichsweise geringer Ladekapazität optimiert möglichst viele Rollwagen mit darauf angeordneten und gesicherten Transportkisten eingeladen werden, und das Handling der beladenen Rollwagen in den oftmals beengten Räumlichkeiten der Abnahmestellen wird vereinfacht.

Allerdings bleibt auch bei dem bekannten System gemäß dem vorstehend erläuterten Stand der Technik ein Problem dadurch gegeben, dass die Grundplatte des Rollwagens entsprechen den vorstehenden Ausführungen drauf ausgelegt ist, nebeneinander angeordnet zwei Transportkisten aufzunehmen, also zum Aufstapeln von zwei nebeneinander errichteten Kistenstapeln vorgesehen ist. Dies führt insbesondere dann zu Problemen, wenn mit dem bekannten System Waren oder Güter transportiert werden, die zu verschiedenen Verwendungsorten - z.B. einem Kühlraum oder einem Theken- oder Tresenbereich - verbracht werden sollen.

Teilmengen der beiden Kistenstapel eines Rollwagens können unterschiedlichen Stellplätzen zugeordnet werden. So kann z.B. eine Teilmenge der Kisten eines Rollwagens einer besonderen Lagerung bedürfen, zum Beispiel gekühlt, während eine andere Teilmenge von Kisten desselben Rollwagens unmittelbar an anderer Stelle (an einem anderen Ort) verwendet werden soll.

Dann nämlich müssen die Rollwagen vor Ort teilweise abgeladen, d. h. es müssen Kisten entnommen werden, der so teilweise entleerte Rollwagen muss dann in einen entsprechend hergerichteten Lagerraum oder an eine anderweitige Verwendungsstelle verbracht werden.

So werden teilweise ganze Kistenstapel auf einen kleinen Rollwagen umgeladen, wenn ein Befahren des Verwendungsortes mit dem großen, zwei Kistenstapel fassenden Rollwagen infolge räumlicher Einschränkungen des Verwendungsortes nicht möglich ist. Dieser Umladeprozess ist zeitaufwendig und führt insbesondere beim ausführenden Personal zu einer zusätzlichen körperlichen Belastung. Typische Gewichte einer einzelnen beladenen Kiste liegen in der Größenordnung von 8 bis 15 kg je Kiste.

Am letzten Verwendungsort jedoch nimmt dann der Rollwagen vergleichsweise viel Raum ein, da er insbesondere nicht mehr vollständig beladen und mit Transportkisten mit darin angeordneten Waren bestückt ist, sondern jedenfalls teilentladen. Um diesen Stauraum optimal auszunutzen müssen nun weitere Transportkisten von einem anderen Rollwagen umgeladen werden, um die entnommenen Kisten wieder aufzufüllen. Dies führt aber insbesondere dann zu weiteren Problemen, wenn hier Kisten mit anderen Waren, zum Beispiel in einer Bäckereifiliale Teiglingen für andere Backwaren, zugeladen werden, sodass dann der gelagerte Rollwagen mit den darauf angeordneten Kisten mit Waren durchmischt ist, was das weitere Handling erschwert.

Hier soll mit der vorliegenden Erfindung angesetzt werden, indem eine Rolltransporteinheit nach Anspruch 1 angegeben wird, die ein flexibleres Handling erlaubt, und in dem auch ein System zum Transportieren, Umschlagen und/oder Lagern von Gütern angegeben wird, welches ebendiesen Vorteil mit sich bringt. Bevorzugte Ausführungsformen der Erfindung sind in den abhängigen Ansprüchen definiert.

Mit der Erfindung wird zunächst eine Rolltransporteinheit für, insbesondere in Kisten aufgestapelte, Güter zur Anwendung in der Güterlogistik angegeben. Diese Rolltransporteinheit umfasst zunächst einen Aufstellboden, der eine Oberseite und eine Unterseite aufweist. Ein solcher Aufstellboden kann dabei z.B. plattenförmig, also in Form eines geschlossenen Bodens ausgebildet sein. Er kann aber auch einen offenen Boden aufweisen und z.B. lediglich rahmenartig gebildet sein, mit zum Beispiel leistenartigen Kantenabschnitten, auf denen die Kisten aufgestellt werden können und die insoweit die Aufstellfläche definieren. Insoweit ist der Begriff "Aufstellboden" nicht auf einen im engen Wortsinn zu verstehenden, geschlossenen Boden beschränkt, sondern ist in einer breiten Definition zu sehen, die insbesondere auch durchbrochene Strukturen, wie eben eine bloße Rahmengestaltung, mit einschließt.

Auf der Oberseite des Aufstellbodens ist eine einheitliche Aufstellfläche für die Aufnahme von zu transportierenden Gütern, insbesondere von Stapelkisten mit darin angeordneten zu transportierenden Gütern, ausgebildet. Unterhalb des Aufstellbodens der erfindungsgemäßen Rolltransporteinheit sind Räder angeordnet zum rollenden Bewegen der Rolltransporteinheit. Diese Räder können insbesondere in an der Unterseite des Aufstellbodens angeordneten Radlagern festgelegt sein. Mit Vorteil können diese Räder um eine senkrecht zu einer durch den Aufstellboden definierten Ebene verschwenkbar sein, um die Rolltransporteinheit lenkbar zu gestalten. Weiterhin können mit Vorteil an den Rädern Blockiervorrichtungen vorgesehen sein, um die Rolltransporteinheit in einer Abstellposition gegen ein Fortrollen zu sichern.

Erfindungsgemäß weist die Rolltransporteinheit zwei Teileinheiten auf, ist insbesondere aus zwei solchen Teileinheiten gebildet. Diese Teileinheiten weisen jeweils einen eine Auflagefläche ausbildenden Bodenabschnitt auf und sind mit ihren Bodenabschnitten zum Bilden des Aufstellbodens, insbesondere nahtlos, aneinandergefügt und miteinander lösbar verbunden. Dabei bilden die Auflageflächen der Bodenabschnitte zusammen die einheitliche Aufstellfläche. Unterhalb eines jeden der beiden Bodenabschnitte sind wenigstens drei Räder in einer von einer linearen Aufreihung abweichenden Anordnung angeordnet.

Durch diese erfindungsgemäße Ausgestaltung kann also eine erfindungsgemäße Rolltransporteinheit einerseits in einem Zustand, in der die beiden Teileinheiten lösbar mit einander verbunden und deren Bodenabschnitte zu dem Aufstellboden vereint sind, in einer wie für vergleichbare Rolltransportwagen bekannten Weise verwendet werden, z.B. mit insbesondere zwei nebeneinander darauf aufgestellten und platzierten Kistenstapeln. Andererseits ist es aber auch möglich, die erfindungsgemäße Rolltransporteinheit durch Lösen der lösbaren Verbindung der Teileinheiten aufzuteilen in zwei dann autarke "Sub-Rollwagen", dies z.B. insbesondere in einer Weise, dass auf jeder der Teileinheiten ein Kistenstapel verbleibt. So kann zum Beispiel die erfindungsgemäße Rolltransporteinheit für den eigentlichen Transport zu einem Bestimmungsort, beispielsweise der Filiale eines Bäckereibetriebs, mit zusammengefügten und miteinander verbundenen Teileinheiten verwendet werden, was einerseits das Handling erleichtert, andererseits die Beladung von Transportfahrzeugen, da die erfindungsgemäße Rolltransporteinheit insbesondere Grundabmessungen aufweist, wie sie im Logistikwesen für bekannte Rolltransportwagen vereinheitlicht üblich sind. Am Bestimmungsort, zum Beispiel einer Filiale eines Bäckereibetriebs, kann die Rolltransporteinheit dann durch Lösen der Verbindung in die beiden dann getrennten Teileinheiten ("Sub-Rollwagen") aufgeteilt werden, die dann wiederum vor Ort unterschiedlich weiter verbracht werden können. So kann beispielsweise eine der Teileinheiten mit darauf aufgestapelten Kisten in einen Lagerraum, zum Beispiel einen gekühlten Lagerraum, verbracht werden, während eine zweite der Teileinheiten an einen Ort für die Weiterverarbeitung der in Kisten darauf aufgestapelten Güter, zum Beispiel in einen Backraum verbracht werden kann, in dem dann in den Kisten angeordnete Teiglinge in den Backofen eingeführt werden können zum Backen der fertigen Teigwaren.

Sofern es sich um fertige Backwaren handelt, können diese auch direkt in den Tresenbereich verbracht werden. Dort werden die Backwaren aus den Kisten entnommen und in die Auslage verbracht. In dem räumlich stark eingeschränkten Tresenbereich ist ein Rangieren mit dem normalen (großen) Gitterrollwagen oftmals nicht möglich.

Hierbei ist einerseits die Flexibilität des Verbringens kleinerer Teilladungen an unterschiedliche Verweilorte von Vorteil, zudem sind die einzelnen, vor Ort zu handhabenden Teileinheiten geringer in ihren Abmessungen, was insbesondere dort, wo am Bestimmungsort der Lieferung beengte Räume vorherrschen, von besonderem Vorteil ist.

Der grundsätzliche Ansatz, Rolltransportwagen miteinander zu verbinden, ist zwar bekannt, zum Beispiel aus der DE 20 2016 102 917 U1. Allerdings erfolgt eine Verbindung dort nicht zum Bilden einzelner, autark zu handhabender Rolltransporteinheiten aus zwei Teileinheiten, sondern dient vielmehr dem Zweck einer Sicherung einer Ladung mit mehreren untereinander verwendbaren Rolltransportwagen durch das Vorsehen der Verbindung von mehreren solcher Transportwagen, dies sogar entlang der Längs- und/oder Querkanten und zu "Clustern" mit mehreren untereinander verbundenen Transportwagen. Dieses Transportprinzip ist auch als "Routenzug" bekannt.

Ein weiterer Aspekt der erfindungsgemäßen Gestaltung der hier beschriebenen und beanspruchten Rolltransporteinheit besteht ferner in der Ausgestaltung der lösbaren Verbindung zwischen den Teileinheiten. So weisen die miteinander verbindbaren Teileinheiten jeweils wenigstens ein mit der jeweiligen Teileinheit verbundenes erstes Kopplungsmittel auf, und es ist ein relativ zu den Teileinheiten entlang einer Riegelrichtung von einer Freigabeposition in eine Fixierposition bewegbares Fixierelement mit darin vorgesehenen, zu den ersten Kopplungsmitteln korrespondierend ausgebildeten und im Zusammenwirken mit den ersten Kopplungsmitteln eine die beiden Teileinheiten lösbar fixierende Verbindung schaffenden zweiten Kopplungsmitteln vorgesehen. Die miteinander korrespondierenden ersten und zweiten Kopplungsmittel sind dabei jeweils aus einem Paar eines Riegelzapfens und einer Riegelausnehmung gebildet, wobei die Riegelausnehmung einen sich in der Riegelrichtung verjüngenden Querschnitt aufweist.

Diese erfindungsgemäß ausgebildeten Kopplungsmittel erlauben ein einfaches lösbares Verbinden der beiden Teileinheiten zu der Rolltransporteinheit. Durch die Verwendung von zusammenwirkenden Riegelzapfen und Riegelausnehmungen mit der sich in der Riegelrichtung verjüngenden Querschnittsform kann insbesondere beim Verriegeln bei einer entsprechend abgestimmten Anordnung von Riegelzapfen und Riegelausnehmungen ein Zusammenziehen der beiden Teileinheiten und damit ein insbesondere spaltfreies bzw. nahtloses Zusammenfügen der beiden Bodenabschnitte zu dem Aufstellboden und zum Bilden der einheitlichen Aufstellfläche erreicht werden. In der Anordnung ist es dabei möglich, dass zum Beispiel an den Teileinheiten selbst, zum Beispiel seitlich überstehend, jeweils Riegelzapfen festgelegt sind, dass das Fixierelement entsprechend korrespondierend in einem passenden Abstand zueinander eingebrachte Riegelausnehmungen aufweist. Es ist aber ebenso gut möglich, die Riegelzapfen an dem Fixierelement und die Riegelausnehmungen an den Teileinheiten anzuordnen oder aber auch jeweils einen Riegelzapfen an der einen Teileinheit, eine Riegelausnehmung an der anderen Teileinheiten und korrespondierend eine Riegelausnehmung und einen Riegelzapfen an dem Fixierelement.

Die lösbare Verbindung der Teileinheiten wird geschaffen, indem die Riegelzapfen in die Riegelausnehmungen eingeführt, bzw. indem die Riegelausnehmungen über die Riegelzapfen geführt werden und indem weiterhin das Fixierelement in der Riegelrichtung verlagert wird, bis durch den sich verjüngenden Querschnitt der Riegelausnehmungen die Riegelzapfen aufeinander zu gezogen werden zum Schaffen der Verbindung zwischen den Teileinheiten. Die Riegelzapfen können dabei, müssen dies aber nicht unbedingt an einem freistehenden Ende einen durchmesservergrößerten Kopfabschnitt aufweisen, der insbesondere einen den Querschnitt der Riegelausnehmungen in dem Abschnitt, in dem sie die Verriegelung bewirken, übersteigenden Durchmesser aufweisen kann.

Die Regelausnehmung kann sich insbesondere in der Riegelrichtung keilartig verjüngen, insbesondere mit unter einem gleichen Winkel auf einander zu laufenden Schenkeln. Insbesondere ist dabei eine tropfenförmige Ausbildung der Riegelausnehmungen denkbar, mit einem in die Riegelrichtung weisend spitz zulaufenden Ende der Tropfenform.

Das Fixierelement kann insbesondere die Form einer Platte aufweisen, also als Fixierplatte ausgebildet sein. Eine solche Platte ist in der Herstellung einfach zu fertigen und kann, wenn das Fixierelement die Riegelausnehmungen aufweist, einfach mit diesen versehen werden. Zudem kann eine Fixierplatte in enger Anlage an plan ausgebildete Seitenkanten der Teileinheiten der Rolltransporteinheit in einem Bereich angelegt werden, in dem die jeweiligen ersten Kopplungsmittel ausgebildet sind, zum Beispiel in Form von Riegelzapfen.

In der Praxis wird man dafür Sorge tragen, dass das Fixierelement im Gebrauch, dann wenn es die Teileinheiten in der lösbaren Verbindung mit einander verriegelt, also in der Fixierposition, in die Riegelrichtung und damit in die Fixierposition gezwungen ist. Dies kann zum Beispiel unter Ausnutzung der Schwerkraft geschehen, wenn ein entsprechend schweres Fixierelement gebildet ist, das aufgrund seines Eigengewichts eine ausreichende Kraft in der Riegelrichtung aufbringen, um die beiden Teileinheiten miteinander in Verbindung zu halten. Dies kann aber auch erfolgen, indem durch ein Federmittel das Fixierelement in die Fixierposition federbelastet ist. Denkbar ist es auch, das Fixierelement in die Fixierposition zu verlagern und dort mit geeigneten Mitteln zu arretieren, um so insbesondere einen reinen Formschluss zu erhalten.

In einer weiteren möglichen Ausgestaltungsform kann vorgesehen sein, dass die Teileinheiten der Rolltransporteinheit jeweils Anstoßflächen, mit denen sie zum Bilden des Aufstellbodens aneinander liegen, jeweils wenigstens ein Zentriermittel aufweisen. Diese Zentriermittel sind dann komplementär ausgebildet und wirken zum Ausrichten und Zentrieren der Teileinheiten beim Verbinden zum Ausbilden des Aufstellbodens zusammen. Eine solche Ausgestaltung hilft beim Verbinden der Teileinheiten zu der Rolltransporteinheit, schnell eine zentrierte und passgenau Verbindungposition zu finden und einzunehmen, sodass die beiden Teileinheiten anschließend schnell und einfach durch Anbringen des Fixierelements und bewegen desselben in die Fixierposition miteinander verbunden und lösbar fixiert werden können. Als Zentriermittel kommen insbesondere an den Stoßflächen einerseits ausgebildete kegelförmige oder pyramidenförmige Vorsprünge und andererseits korrespondierend ausgebildete Ausnehmungen bzw. Rücksprünge in Betracht.

Mit besonderem Vorteil kann die Rolltransporteinheit gemäß der Erfindung aus zwei Teileinheiten gebildet sein, die gleich gebildete Auflageflächen aufweisen, aus denen die Aufstellfläche des Aufstellbodens gebildet wird. Mit anderen Worten ergibt sich hierbei ein Aufbau der Rolltransporteinheit aus zwei im Wesentlichen gleich großen und gleich gebildeten Teileinheiten. So können insbesondere auf den jeweiligen Teileinheiten je ein Kistenstapel mit gleichgroßen Stapelkisten zum Verwahren und Transportieren von Gütern gebildet werden mit den vorstehend bereits angedeuteten und erläuterten Vorteilen.

Grundsätzlich genügen jeweils drei in nichtlinearer Ausrichtung unter den Bodenabschnitten der beiden Teileinheiten vorgesehene Räder, um die nicht zu der Rolltransporteinheit verbundenen Teileinheiten individuell standfest aufstellen und über einen Untergrund rollen zu können. Für eine weitergehende Stabilisierung, was insbesondere bei vergleichsweise schweren Auflasten von Vorteil ist, kann es aber zu bevorzugen sein, jedenfalls vier Räder dort vorzusehen, vorzugsweise festgelegt an den oder im Bereich der Eckabschnitten der Bodenabschnitte der Teileinheiten.

Ein weiterer Aspekt der Erfindung besteht ferner in einem System zum Transportieren, Umschlagen und/oder Lagern von Gütern, das eine wie vorstehend näher beschriebene und jedenfalls mit den zwingend vorgesehenen, gegebenenfalls auch den optional erwähnten Merkmalen gestaltete Rolltransporteinheit aufweist, zudem eine Mehrzahl von auf dem Aufstellboden aufstellbaren Transportkisten und weiterhin wenigstens eine in ihrer Länge verstellbar einstellbare und in einer eingestellten Länge feststellbaren Riegelstange. Die Riegelstange weist dabei erfindungsgemäß an einem ersten ihrer beiden Längsenden einen Koppelabschnitt auf, mit dem sie mit einer Kante einer der Transportkisten oder auch zwei Kanten benachbarter Transportkisten verbunden und daran lösbar festgelegt werden kann, und an ihrem zweiten der beiden Längsenden angeordnet das Fixierelement.

Im Grundprinzip ähnelt dieses System damit dem in der EP 3 670 292 A1 beschriebenen System, mit der wesentlichen Änderung, dass im erfindungsgemäßen System einerseits nicht ein durchgehend gebildeter Rolltransportwagen, sondern die erfindungsgemäße, aus zwei Teileinheiten gebildete Rolltransporteinheit enthalten ist, und dass die Riegelstange an ihrem zweiten Längsende das Fixierelement aufweist, insbesondere mit diesem dort starr verbunden ist. Die Handhabung der Riegelstange zum Fixieren von Kistenstapeln auf der Rolltransporteinheit erfolgt dabei insbesondere in der wie in der EP 3 670 292 A1 beschriebenen Weise, sodass diesbezüglich auf die Beschreibung dort Bezug genommen werden kann, wobei die Offenbarung der EP 3 670 292 A1 durch Bezugnahme in die hiesige Beschreibung und Offenbarung mit aufgenommen wird. Entsprechend kann es sich bei den Transportkisten insbesondere auch um Raumsparkisten wie z.B. Klapp- oder Faltkisten handeln, wobei dann der Koppelabschnitt der Riegelstange gebildet ist, auch an außen gelegenen Strukturen von eingeklappten oder eingefalteten Kisten anzugreifen, wie dies auch in der hier in Bezug genommenen Offenbarung der EP 3 670 292 A1 beschrieben ist, dort auch mit näheren, für die vorliegende Erfindung ebenfalls geltenden Angaben und Beschreibungen.

Die Ausgestaltung der Riegelstange, die sich vorrangig dadurch von der in der EP 3 670 292 A1 beschriebenen Riegelstange unterscheidet, dass an ihrem zweiten Längsende das Fixierelement angeordnet ist, ist ansonsten ebenfalls wie in der genannten Druckschrift beschrieben, sodass auch insoweit auf die dortige Offenbarung zu verweisen ist, die ebenfalls für die hier beschriebene und beanspruchte Riegelstange Gültigkeit hat. Sie kann insoweit insbesondere auch als eine teleskopartig verschiebbare Riegelstange ausgebildet sein mit einem Verriegelungs- oder Klemmelement zum Festlegen der eingestellten Längenposition. Der hier besondere Umstand, dass die Riegelstange an ihrem zweiten Ende das Fixierelement aufweist, führt dazu, dass bei einem Sichern des oder der auf die erfindungsgemäße Rolltransporteinheit aufgestapelten Kistenstapel(s) mithilfe der Riegelstange, die mit ihrem zweiten Längsende mit den ersten Kopplungsmitteln an den beiden Teileinheiten in Eingriff gebracht wird, zugleich auch die Verriegelung der Verbindung der beiden Teileinheiten zu der Rolltransporteinheit erhalten und sichergestellt wird. Entsprechend sind die Riegelausnehmungen hier so ausgerichtet und angeordnet, dass sich eine Riegelrichtung ergibt, die von der Unterseite des Aufstellbodens im Wesentlichen senkrecht zu der durch die Aufstellfläche bestimmten Ebene in Richtung der Oberseite des Aufstellbodens weist. Eine solche erfindungsgemäße Ausgestaltung des Systems ermöglicht einerseits mit einem einfachen und schnell auszuführenden Handgriff ein gemeinsames Sichern der auf der Rolltransporteinheit aufgebrachten Beladung in Form der mit Gütern befüllten Transportkisten und andererseits ein gleichzeitiges Verriegeln der lösbaren Verbindung der beiden Teileinheiten zu der Rolltransporteinheit. In umgekehrter Weise kann dann an einem Zielort bei einem Aufheben der Ladungssicherung zugleich auch ein Entkoppeln der beiden Teileinheiten der Rolltransporteinheit erhalten werden, sodass die beiden Teileinheiten dann gesondert verwendet werden können. Ersichtlich ist dies von besonderem Vorteil, wenn die Rolltransporteinheit mit entsprechend der vorstehend beschriebenen möglichen Weiterbildung im Wesentlichen gleich gebildete, jedenfalls gleich große Aufnahmeflächen versehene Teileinheiten aufweist und die Transportkisten jeweils eine Aufstandsfläche aufweisen, die im Wesentlichen der Auflageflächen der Bodenabschnitte der Teileinheiten entspricht. Denn dann ist es gerade möglich, bei einer gelösten Verbindung der Teileinheiten die Rolltransporteinheit in die beiden Teileinheiten aufzuteilen mit jeweils einem darauf angeordneten Stapel der Transportkisten. Wenn dann auch noch, wie im Rahmen einer weiteren vorteilhaften Weiterbildung vorgesehen, der Koppelabschnitt der Riegelstange geformt und ausgebildet ist, an jeweils den Kanten zweier benachbart angeordneter, auf jeweils einem der Bodenabschnitte auflastenden Transportkisten gleichzeitig anzugreifen, mithin also beide Kistenstapel gemeinsam zu sichern, ist ein besonders einfaches Handling möglich. So können nämlich durch das Anbringen einer Riegelstange, vorteilhafterweise durch das Anbringen je einer Riegelstange an je einer von zwei einander gegenüberliegender Seiten der Rolltransporteinheit beide Kistenstapel gesichert und die Teileinheiten zu der Rolltransporteinheit verbunden werden, umgekehrt durch ein Lösen der Riegelstange bzw. der beiden einander gegenüberliegenden Riegelstangen die Sicherung der Kistenstapel aufgelöst und die beiden Teileinheiten aus der Rolltransporteinheit gelöst und dann sogleich individuell und separat durch Rollen weiter verbracht werden, insbesondere in verschiedene Bereiche für die Weiterverarbeitung am Zielort.

Weitere Vorteile und Merkmale der Erfindung ergeben sich aus der nachstehenden Beschreibung möglicher Ausgestaltungsformen und aus den beigefügten Figuren, die mögliche Ausgestaltungsformen veranschaulichen. Dabei zeigen:
- Figur 1: eine schematische Ansicht einer aus zwei Teileinheiten zu bildenden Rolltransporteinheit in einem Zustand mit voneinander getrennten Teileinheiten;
- Figur 2: in zwei Darstellungen a und b schematisch das Prinzip des Verbindens der beiden Teileinheiten zu der Rolltransporteinheit mittels eines Fixierelements;
- Figur 3: eine schematische Aufsicht auf zwei miteinander zu der Rolltransporteinheit zu verbindende Teileinheiten;
- Figur 4: zwei mit aufgestapelten Kisten beladene Teileinheiten, die zu einer erfindungsgemäßen, mit Kisten beladenen Rolltransporteinheit zusammenzuführen sind;
- Figur 5: eine aus den beiden mit aufgestapelten Kisten beladenen Teileinheiten gebildete mit Kisten beladene Rolltransporteinheit, wobei die Kisten mit einer Riegelstange gesichert und zugleich die Teileinheiten mit einem an der Riegelstange festgelegten Fixierelement in der verbundenen Stellung fixiert sind; und
- Figur 6: in drei Darstellungen a, b und c schematisch und jeweils in einer Frontalansicht sowie einer Seitenansicht das Vorgehen beim Verbinden der mit Kistenstapeln beladenen Teileinheiten zu der Rolltransporteinheit.

In den Figuren sind mögliche Ausgestaltungsvarianten der Erfindung schematisch veranschaulicht. Die Figuren stellen dabei insbesondere keine vollständigen Detailzeichnungen dar und sind auch nicht maßstabsgerecht. Sie zeigen wesentliche Merkmale der erfindungsgemäßen Gestaltung und dienen einem vertieften Verständnis der dargestellten Ausführungsbeispiele, die nachstehend auch noch einmal unter Bezugnahme auf die Figuren näher beschrieben und erläutert werden.

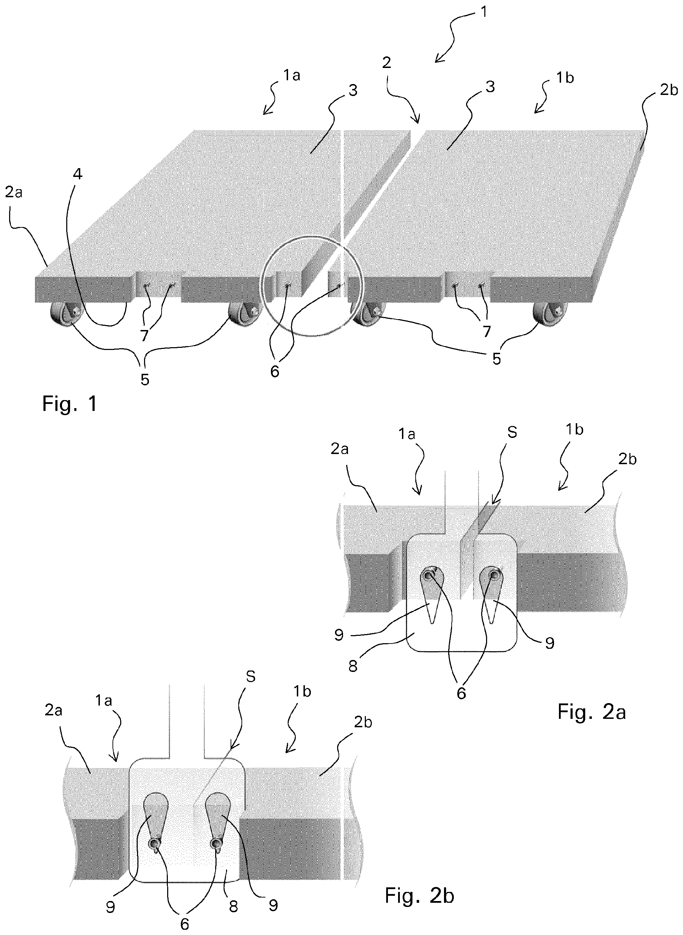

In den Figuren 1 bis 3 ist zunächst eine erfindungsgemäße Rolltransporteinheit 1 dargestellt mit verschiedenen, in möglichen Ausgestaltungsvarianten wählbaren Merkmalen.

Die Rolltransporteinheit 1 ist aus zwei Teileinheiten 1a und 1b gebildet, die lösbar miteinander verbindbar sind. Die Rolltransporteinheit 1 hat einen Aufstellboden 2, der gebildet ist aus zwei Bodenabschnitten 2a, 2b, die in den jeweiligen Teileinheiten 1a und 1b gebildet sind. In dem gezeigten Ausführungsbeispiel ist der Aufstellboden 2 und sind die Bodenabschnitte 2a und 2b brettartig gebildet, bilden also einen durchgehenden Boden aus. Es sind aber auch Ausgestaltungsvarianten denkbar, bei denen der Aufstellboden 2, bzw. die Bodenabschnitte 2a und 2b gitter- oder rostartig gebildet sind oder bei denen lediglich ein umlaufender Rahmen mit einer Aufstellleiste gebildet ist, auf der entsprechend Gegenstände abgestellt werden können. Der Aufstellboden 2, bzw. die Bodenabschnitte 2a und 2b weisen jeweils eine Oberseite 3 und einer Unterseite 4 auf. Auf der Oberseite drei des Aufstellbodens 2, bzw. der Bodenabschnitte 2a und 2b können Transportbehältnisse, insbesondere Stapelkisten, abgestellt werden. Mit besonderem Vorteil können die Teileinheiten 1a und 1b mit ihren Bodenabschnitten 2a und 2b derart dimensioniert und bemessen sein, dass die Fläche des jeweiligen Bodenabschnitts 2a und 2b im Wesentlichen einer Grund- bzw. Standfläche einer darauf abzustellenden Stapelkiste entspricht, sodass auf jeder der Teileinheiten 1a und 1b ein vertikal zu bildender Kistenstapel abgestellt bzw. aufgestapelt werden kann.

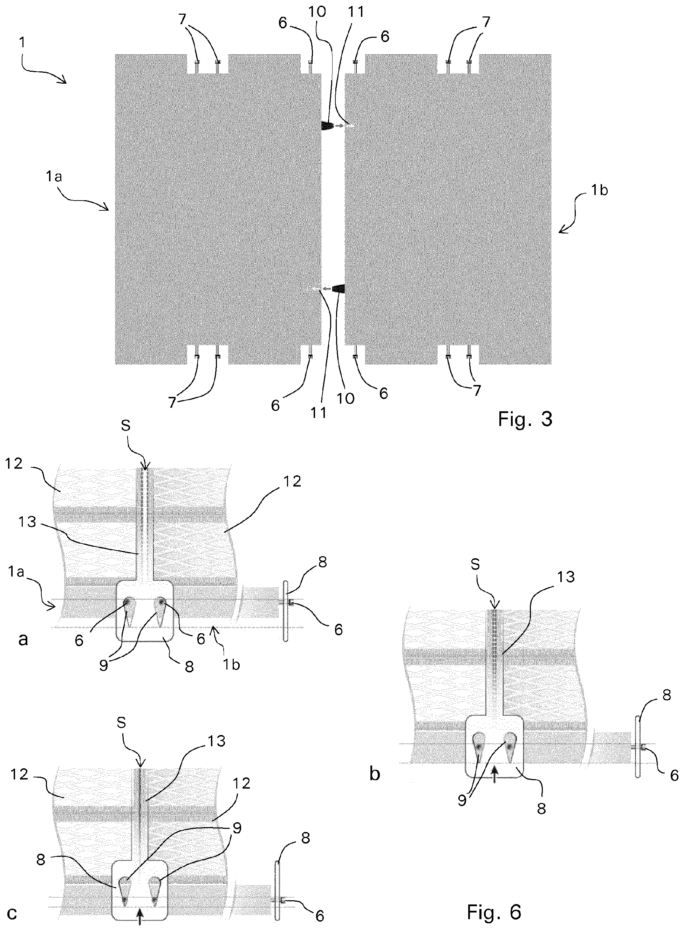

Auf der Unterseite der Bodenabschnitte 2a und 2b sind Räder 5 angeordnet. Es sind dies insbesondere unterhalb jeder der Bodenabschnitte 2a und 2b der jeweiligen Teileinheiten 1a und 1b vier solche Räder 5, nämlich eines im Bereich einer jeden Ecke des rechteckig gebildeten Bodenabschnitts 2a, 2b. In der Figur 1 sind lediglich die in der Darstellung vorne gelegenen Räder 5 zu erkennen, die in den in der Figur hinten gezeigten Ecken ausgebildeten Räder sind nicht dargestellt bzw. nicht zu erkennen. Jedenfalls ein Teil der Räder 5 kann insbesondere mit einer um eine Vertikalachse verschwenkbaren Aufhängung an der Unterseite 4 des je welligen Bodenabschnitts 2a, 2b montiert sein, sodass hierüber eine Lenkung der plattenartigen Teileinheit 1a, bzw. 1b ermöglicht ist. Jede Teileinheiten 1a, 1b kann auf diese Weise rollend verschoben und individuell verbracht bzw. verlagert werden. Die beiden Teileinheiten 1a und 1b können aber auch zu der Rolltransporteinheit 1 zusammengefügt und dabei fest miteinander verbunden werden. Zu diesem Zweck ist jeweils an einer Ecke der Teileinheit 1a bzw. 1b, hier zum Beispiel in Rücksprüngen vorgesehen, ein Zapfen 6 angeordnet, der im Wesentlichen horizontaler von einer Kantenfläche des jeweiligen Bodenabschnitts 2a bzw. 2b vorsteht. In der Figur 1 sind lediglich im vorderen Bereich und in dem durch einen Kreis markierten Ausschnitt diese Zapfen 6 gezeigt. Es können aber ebenso, und sind dies insbesondere mit Vorteil auch, auf der gegenüberliegenden Seite, an denen die Bodenabschnitte 2a und 2b aneinanderstoßen, also in einem in der Figur hinten dargestellten Abschnitt, solche Zapfen 6 ausgebildet sein, wie dies auch in der Figur 3 angedeutet ist. Diese Zapfen 6 werden nun zum Verbinden der Teileinheiten 1a und 1b durch Öffnungen 9 einer Fixierplatte 8 hindurchgeführt, wobei die Öffnungen 9 in der Fixierplatte 8 eine sich in einer Längsrichtung verjüngende Öffnungsweite aufweisen, insbesondere tropfenförmig gebildet sind, bzw. konisch zu einer Art spitze zulaufen. Dabei sind die schmalen, in den Figuren 2a und 2b unten dargestellten Enden der Öffnungen 9 im Wesentlichen in einem Abstand zueinander in der Fixierplatte 8 angeordnet, der einem Abstand der Zapfen 6 bei spaltfrei aneinander anliegenden Kanten der beiden Bodenabschnitte 2a und 2b entspricht.

Um die beiden Teileinheiten 1a, 1b nun zu verbinden, wird die Fixierplatte 8 mit den Öffnungen 9 über die Zapfen 6 der nebeneinandergestellten Teileinheiten 1a, 1b geführt und anschließend so in einer Längsrichtung bewegt, dass die Zapfen 6 in Richtung der schmalen Enden der sich verjüngenden Öffnungen 9 verlagert werden, bzw. umgekehrt, dass die Öffnungen 9 so über die Zapfen 6 geführt werden, dass die Zapfen 6 in den schmalen Bereichen der Öffnungen 9 liegen. Hierdurch wird ein Spalt S zwischen den aneinander anliegenden Längskanten der Bodenabschnitt 2a, 2b der Teileinheiten 1a und 1b geschlossen, bis die Zapfen 6 im Bereich der schmalsten Stellen der Öffnungen 9 liegen, wie dies in Figur 2b dargestellt ist. Die Fixierplatte 8 muss nun in dieser Stellung gehalten und gesichert bzw. verriegelt werden. Dies kann zum Beispiel federbelastet passieren, durch ein formschlüssiges Festlegen der Fixierplatte 8 oder aber auch in anderer Weise, zum Beispiel wenn die Fixierplatte 8 nicht wie in den Figuren 2a und 2b dargestellt eingesetzt wird, sondern in einer um 180° gedrehten Anordnung, also mit den schmalen Öffnungsweiten nach oben weisend, schwerkraftgetrieben, indem die Fixierplatte 8 durch ein Gewicht oder durch ihr Eigengewicht nach unten gezogen wird. An den Teileinheiten 1a, 1b können, wie dies in der Figur 1 und auch in der Figur 3 gezeigt ist in weiteren Abschnitten zusätzliche Zapfen 7 vorgesehen sein, dies ebenfalls wiederum in Ausschnitten der jeweiligen Kante des Bodenabschnitts 2a bzw. 2b. Diese Zapfen 7 können in einer nachfolgend noch näher zu erläuternden Weise genutzt werden, um zum Beispiel auf einer der Teileinheiten 1a, 1b aufgestapelt Kisten zu sichern.

Um die beiden miteinander zu verbindenden Teileinheiten 1a und 1b in einer sauberen und definierten Ausrichtung mit zueinander fluchtenden Querkanten zu verbinden und die Teileinheiten 1a und 1b beim Verbinden in eine solche Position zu zwingen, können Zentriermittel vorgesehen sein, die an den jeweiligen Teileinheiten 1a und 1b komplementär ausgebildet sind und beim Verbinden miteinander zusammenwirken. Dies können zum Beispiel wie in der Figur 3 gezeigte trapezförmige oder konisch gebildete Vorsprünge 10 sein, die in einer entsprechenden Position in der jeweils gegenüberliegenden Kante der anderen Teileinheit 1a, 1b ausgebildete, trapezförmige sich verjüngende, bzw. konisch sich verjüngende Ausnehmungen 11 eingreifen und damit beim Verbinden eine Zentrierung und Ausrichtung bewirken.

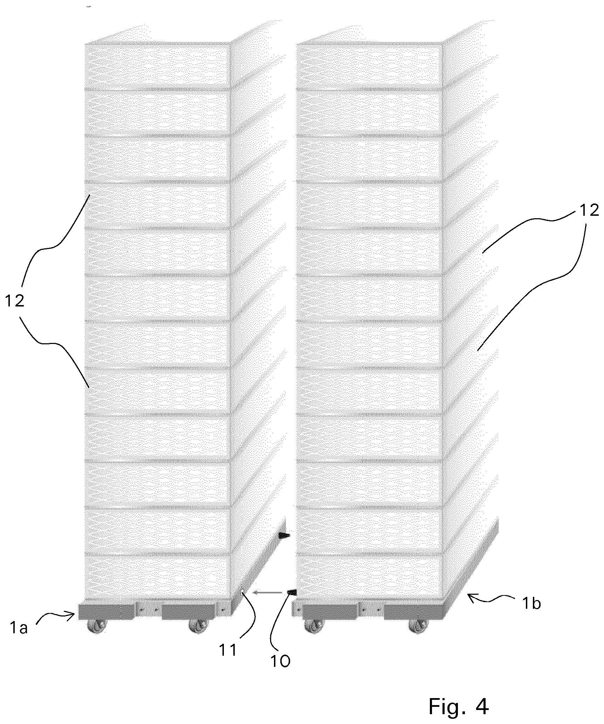

Die Figuren 4 bis 6 zeigen, wie mit einer erfindungsgemäßen und wie vorstehend beschriebenen Rolltransporteinheit 1 und darauf stapelweise abgestellten Stapelkisten 12 ein Transportsystem gebildet werden kann. In Figur 4 ist zunächst gezeigt, wie zwei noch getrennte oder wieder getrennte Teileinheiten 1a und 1b jeweils mit einem Stapel von Transportkisten 12 bestückt sind, wobei die unterste Transportkiste 12 jeweils auf dem Bodenabschnitt 2a bzw. 2b der jeweiligen Teileinheit 1a beziehungslose 1b ruht und diesen flächenmäßig im Wesentlichen mit ihrer Grundfläche ausfüllt. In dieser Ausgestaltung und getrennten Anordnung können die Teileinheiten 1a, 1b jeweils separat transportiert und auf ihren Rädern 5 rollend verschoben und verlagert werden. Sie können aber auch zusammengeschoben werden und dann in einer wie vorstehend beschriebenen Weise durch Zusammenwirken einer Fixierplatte 8 mit den Zapfen 6 miteinander fixiert verbunden werden.

Dabei ist die Fixierplatte 8 in dem gezeigten Ausführungsbeispiel an einer Riegelstange 13 an deren unteren Ende festgelegt. Die Riegelstange 13 hat an ihrem oberen Ende einen Koppelabschnitt 14, mit dem sie auf den Kanten 12a von Kisten der beiden Kistenstapel aus aufgestapelten Transportkisten 12 aufliegt, also einmal auf einer Kante 12a einer obersten Kiste auf der Teileinheit 1a und zudem auf einer Kante 12a der obersten, auf der Teileinheiten 1b aufgestapelten Transportkisten 12. Die Riegelstange 13 ist in ihrer Länge verstellbar und in einer eingestellten Länge fixierbar. Dies ist durch einen neben der Riegelstange 13 dargestellten Doppelpfeil angedeutet. So kann mit der Riegelstange 13 einerseits die aus den beiden Teileinheiten 1a und 1b gebildete Rolltransporteinheit 1 gesichert und fixiert werden, indem nämlich beim Verkürzen der Länge der Riegelstange 13 die Fixierplatte 8 nach oben gezogen wird und dabei, wie dies in den Figuren 6a bis 6c veranschaulicht ist, die Zapfen 6 in den Öffnungen 9 in den Bereich geraten, wo die Öffnungen 9 ihre schmale Öffnungsweite aufweisen und dabei die Zapfen 6 und damit die Teileinheiten 1a und 1b zusammengezogen werden, sodass sich der zwischen den Teileinheiten 1a und 1b gebildete Spalt S verringert und schließlich schließt.

Zugleich wird bei einem solchen Verkürzen der Länge der Riegelstange 13 der Koppelabschnitt 14, der zum Beispiel krallenartig über die jeweilige Kante 12a der obersten Transportkisten 12 in dem jeweiligen Stapel auf beiden Teileinheiten 1a und 1b ragt, in eine die Kistenstapel verriegelte Position gezogen, sodass mit einem einzigen Handgriff bzw. einer einzigen Tätigkeit zum einen die beiden Teileinheiten 1a und 1b sicher fixiert zu der Rolltransporteinheit 1 zusammengefügt werden und zum anderen beide Kistenstapel aus Transportkisten 12 auf den Teileinheiten 1a und 1b fixiert gesichert werden. In der Praxis werden auf den beiden einander gegenüberliegenden Seiten der Rolltransporteinheit 1 zum Verbinden der Teileinheiten 1a und 1b Riegelstangen 13 eingesetzt, sodass einerseits die Fixierung der Verbindung der beiden Teileinheiten 1a und 1b noch stärker gesichert wird und andererseits die Sicherung der Kistenstapel aus den Transportkisten 12 auf den beiden Teileinheiten 1a und 1b ebenfalls verbessert wird.

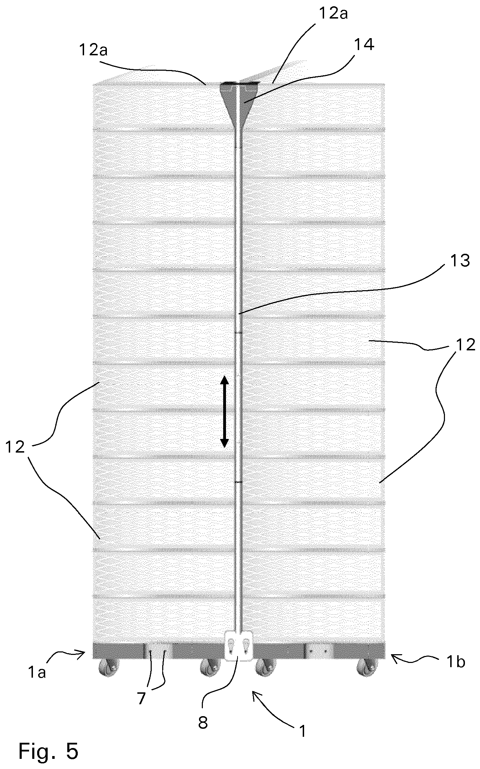

Eine wie in Figur 5 gezeigte Riegelstange 13 kann darüber hinaus auch zum Sichern jeweils des Kistenstapels aus Transportkisten 12 auf der Teileinheiten 1a bzw. auf der Teileinheiten 1b eingesetzt werden, indem nämlich die Fixierplatte 8 der Riegelstange 13 über die ebenfalls in einem dem Abstand der Öffnungen 9 an ihren schmalen Stellen entsprechenden Abstand angeordneten Zapfen 7 gelegt wird und mit ihrem Koppelabschnitt 14 dann lediglich an der Kante 12a der obersten Transportkisten 12 in dem Kistenstapel auf der zugeordneten Teileinheiten 1a bzw. 1b angreift. Auf diese Weise können zum Beispiel Riegelstangen 13 verwendet werden, um eine zusätzliche Sicherung besonders hoher oder aus sonstigem Grund instabiler Kistenstapel aus Transportkisten 12 zu erhalten. Es kann aber auch eine Riegelstange 13, die zum Lösen der beiden Teileinheiten 1a und 1b aus der wie in Figur 5 gezeigten Position entnommen wird, in dem sie zunächst in ihrer Länge wieder verlängert und dann gelöst und abgenommen wird, zum Sichern des Kistenstapels auf einer der Teileinheiten 1a oder 1b eingesetzt werden, um dann diese Teileinheit 1a bzw. als b mit einem gesicherten Kistenstapel aus Transportkisten 12 einzelnen weiter zu verbringen, zum Beispiel ausgehend von einem Wareneingangsbereich in Richtung eines Kühlraumes oder eines anderen Lagerortes.

Aus der vorstehenden Beschreibung ist noch einmal deutlich geworden, dass mit der erfindungsgemäßen Ausgestaltung Rolltransporteinheiten 1 aus Teileinheiten 1a und 1b zusammengestellt werden können, mit denen eine Charge von Transportkisten 12 gemeinsam gehandhabt und auf den Rollen 5 bewegt und zu einem ersten Zielort verbracht werden können; dass dann durch ein Trennen der beiden Teileinheiten 1a und 1b sich entsprechend kleinere Subeinheiten erhalten lassen, die ausgehend von einem ersten Zielort dann wiederum einzelnen gehandhabt und unterschiedlich weiter verbracht werden können, zum Beispiel eine erste der Teileinheiten 1a in Richtung eines Lagerraumes oder Kühlraums, eine zweite der Teileinheiten 1b in einen Verkaufsraum oder dergleichen.

### Bezugszeichenliste

- 1: Rolltransporteinheit
- 1a, b: Teileinheit
- 2: Aufstellboden
- 2a, b: Bodenabschnitt
- 3: Oberseite
- 4: Unterseite
- 5: Rad
- 6: Zapfen
- 7: Zapfen
- 8: Fixierplatte
- 9: Öffnung
- 10: Vorsprung
- 11: Ausnehmung
- 12: Transportkiste
- 12a: Kante
- 13: Riegelstange
- 14: Koppelabschnitt

- S: Spalt

## Patentansprüche

1. Rolltransporteinheit (1) für, insbesondere in Kisten (12) aufgestapelte, Güter zur Anwendung in der Güterlogistik mit
• einem Aufstellboden (2), der eine Oberseite (3) und eine Unterseite (4) aufweist, wobei auf der Oberseite (3) des Aufstellbodens (2) eine einheitliche Aufstellfläche für die Aufnahme von zu transportierenden Gütern, insbesondere von Stapelkisten (12) mit darin angeordneten zu transportierenden Gütern, ausgebildet ist,
• unterhalb des Aufstellbodens (2) angeordneten Rädern (5) zum rollenden Bewegen der Rolltransporteinheit (1),
wobei die Rolltransporteinheit (1) zwei Teileinheiten (1a, 1b) umfasst, die jeweils einen eine Auflagefläche ausbildenden Bodenabschnitt (2a, 2b) aufweisen, wobei Teileinheiten (1a, 1b) mit ihren Bodenabschnitten (2a, 2b) zum Bilden des Aufstellbodens (2), insbesondere nahtlos, aneinandergefügt und miteinander lösbar verbunden sind, wobei die Auflageflächen der Bodenabschnitte (2a, 2b) zusammen die einheitliche Aufstellfläche bilden und wobei unterhalb eines jeden der Bodenabschnitte (2a, 2b) wenigstens drei Räder (5) in einer von einer linearen Aufreihung abweichenden Anordnung angeordnet sind,
**gekennzeichnet durch** jeweils wenigstens ein mit jeweils einer der miteinander verbindbaren Teileinheiten (1a, 1b) verbundenes erstes Kopplungsmittel sowie durch ein relativ zu den Teileinheiten (1a, 1b) entlang einer Riegelrichtung von einer Freigabeposition in eine Fixierposition bewegbares Fixierelement (8) mit daran vorgesehenen, zu den ersten Kopplungsmitteln korrespondierend ausgebildeten und im Zusammenwirken mit den ersten Kopplungsmitteln eine die beiden Teileinheiten (1a, 1b) lösbar fixierende Verbindung schaffenden zweiten Kopplungsmitteln, wobei die miteinander korrespondierenden ersten und zweiten Kopplungsmittel jeweils aus einem Paar eines Riegelzapfens (6) und einer Riegelausnehmung (9) gebildet sind, wobei die Riegelausnehmung (9) einen sich in der Riegelrichtung verjüngenden Querschnitt aufweist.

2. Rolltransporteinheit (1) nach Anspruch 1, **dadurch gekennzeichnet, dass** die Riegelausnehmungen (9) tropfenförmig gebildet sind.

3. Rolltransporteinheit (1) einem der vorhergehenden Ansprüche, **dadurch gekennzeichnet, dass** das Fixierelement (8) eine Fixierplatte ist.

4. Rolltransporteinheit (1) nach einem der vorhergehenden Ansprüche, **dadurch gekennzeichnet, dass** die ersten Kopplungsmittel als Riegelzapfen (6) und dass die zweiten Kopplungsmittel als Riegelausnehmungen (9) gebildet sind.

5. Rolltransporteinheit (1) nach einem der vorhergehenden Ansprüche, **dadurch gekennzeichnet, dass** das Fixierelement (8) in die Fixierposition federbelastet ist.

6. Rolltransporteinheit (1) nach einem der vorhergehenden Ansprüche, **dadurch gekennzeichnet, dass** die Teileinheiten (1a, 1b) jeweils an Stoßflächen, mit denen sie zum Bilden des Aufstellbodens (2) aneinander liegen, jeweils wenigstens ein Zentriermittel (10, 11) aufweisen, wobei die Zentriermittel (10, 11) komplementär gebildet sind und zum Ausrichten und Zentrieren der Teileinheiten (1a, 1b) beim Verbinden zum Ausbilden des Aufstellbodens (2) zusammenwirken.

7. Rolltransporteinheit (1) nach einem der vorhergehenden Ansprüche, **dadurch gekennzeichnet, dass** sie aus zwei Teileinheiten (1a, 1b) mit gleich groß gebildeten, zusammen den Aufstellboden (2) bildenden Auflageflächen (2a, 2b) zusammengesetzt ist.

8. Rolltransporteinheit (1) nach einem der vorhergehenden Ansprüche, **gekennzeichnet durch** jeweils vier unterhalb jeder der beiden Bodenabschnitte (2a, 2b) der Teileinheiten (1a, 1b) angeordnete Räder (5).

9. System zum Transportieren, Umschlagen und/oder Lagern von Gütern mit einer Rolltransporteinheit (1) nach einem der vorhergehenden Ansprüche, einer Mehrzahl von auf dem Aufstellboden aufstellbaren Transportkisten (12) sowie wenigstens einer in ihrer Länge verstellbar einstellbaren und in einer eingestellten Länge feststellbaren Riegelstange (13), wobei die Riegelstange (13) an einem ersten ihrer beiden Längsenden einen Koppelabschnitt (14) aufweist zum Verbinden mit und zum lösbaren Festlegen an einer Kante (12a) der Transportkisten (12) und wobei an dem zweiten der beiden Längsenden der Riegelstange (13) das Fixierelement (8) angeordnet ist.

10. System nach Anspruch 9, **dadurch gekennzeichnet, dass** die Rolltransporteinheit (1) mit den Merkmalen des Anspruchs 7 gebildet ist und dass die Transportkisten (12) jeweils eine Aufstandsfläche aufweisen, die im Wesentlichen der Auflagefläche der Bodenabschnitte (2a, 2b) der Teileinheiten (1a, 1b) entspricht.

11. System nach Anspruch 10, **dadurch gekennzeichnet, dass** der Koppelabschnitt (14) geformt und ausgebildet ist, an jeweils den Kanten (12a) zweier benachbart angeordneter, auf jeweils einem der Bodenabschnitte (2a, 2b) auflastenden Transportkisten (12) gleichzeitig anzugreifen.

12. System nach einem der Ansprüche 9 bis 11, **dadurch gekennzeichnet, dass** die Transportkisten (12) Raumsparkisten, wie Klapp- oder Faltkisten oder auch Drehstapelkisten sind, wobei der Koppelabschnitt (14) der Riegelstange (13) gebildet ist, auch an außen gelegenen Strukturen von eingeklappten, eingefalteten oder umgedreht gestapelten Kisten (12) anzugreifen.

## Claims

1. Roller transport unit (1) for goods stacked in boxes (12), in particular, for use in goods logistics, with
• a base (2) having an upper side (3) and a lower side (4), wherein a uniform base surface for receiving goods to be transported, in particular stackable boxes (12) with goods to be transported arranged therein, is formed on the upper side (3) of the base (2),
• wheels (5) arranged below the base plate (2) for rolling the roller transport unit (1),
wherein the roller transport unit (1) comprises two sub-units (1a, 1b), each of which has a base section (2a, 2b) forming a support surface, wherein the sub-units (1a, 1b) are joined together with their base sections (2a, 2b) to form the base (2), in particular seamlessly, joined together and detachably connected to one another, wherein the support surfaces of the base sections (2a, 2b) together form the uniform base surface and wherein at least three wheels (5) are arranged below each of the base sections (2a, 2b) at least three wheels (5) are arranged in an arrangement deviating from a linear row, **characterised by** at least one first coupling means connected to one of the sub-units (1a, 1b) that can be connected to each other (1a, 1b), and by a fixing element (8) movable relative to the sub-units (1a, 1b) along a locking direction from a release position into a fixing position, with a second coupling means provided thereon, designed to correspond to the first coupling means and, in cooperation with the first coupling means, creating a connection that detachably fixes the two sub-units (1a, 1b), wherein the corresponding first and second coupling means are each formed by a pair of a locking pin (6) and a locking recess (9), wherein the locking recess (9) has a cross-section that tapers in the locking direction.

2. Roller transport unit (1) according to claim 1, **characterised in that** the locking recesses (9) are drop-shaped.

3. Roller transport unit (1) according to one of the preceding claims, **characterised in that** the fixing element (8) is a fixing plate.

4. Roller transport unit (1) according to one of the preceding claims, **characterised in that** the first coupling means are formed as locking pins (6) and the second coupling means are formed as locking recesses (9).

5. Roller transport unit (1) according to one of the preceding claims, **characterised in that** the fixing element (8) is spring-loaded into the fixing position.

6. Roller transport unit (1) according to one of the preceding claims, **characterised in that** the sub-units (1a, 1b) each have at least one centring means (10, 11) at the abutment surfaces with which they lie against each other to form the base (2), wherein the centring means (10, 11) are of complementary design and cooperate to align and centre the sub-units (1a, 1b) when they are connected to form the base (2).

7. Roller transport unit (1) according to one of the preceding claims, **characterised in that** it is composed of two sub-units (1a, 1b) with support surfaces (2a, 2b) of equal size which together form the base (2).

8. Roller transport unit (1) according to one of the preceding claims, **characterised by** four wheels (5) arranged below each of the two base sections (2a, 2b) of the sub-units (1a, 1b).

9. System for transporting, handling and/or storing goods, comprising a roller transport unit (1) according to one of the preceding claims, a plurality of transport boxes (12) which can be placed on the base, and at least one locking bar (13) which is adjustable in length and can be locked at a locking bar (13) that can be adjusted to a set length and locked in place, wherein the locking bar (13) has a coupling section (14) at a first of its two longitudinal ends for connecting to and releasably securing to an edge (12a) of the transport boxes (12), and wherein the locking element (8) is arranged at the second of the two longitudinal ends of the locking bar (13).

10. System according to claim 9, **characterised in that** the roller transport unit (1) is formed with the features of claim 7 and **in that** the transport boxes (12) each have a contact surface which essentially corresponds to the support surface of the base sections (2a, 2b) of the sub-units (1a, 1b).

11. System according to claim 10, **characterised in that** the coupling section (14) is shaped and designed to engage simultaneously at the edges (12a) of two adjacent transport boxes (12) resting on one of the base sections (2a, 2b) respectively.

12. System according to any one of claims 9 to 11, **characterised in that** the transport boxes (12) are space-saving boxes, such as folding boxes or stackable boxes, wherein the coupling section (14) of the locking bar (13) is formed to also engage with the outer structures of folded, collapsed or inverted stacked boxes (12).

## Revendications

1. Unité de transport à rouleaux (1) pour marchandises empilées, en particulier dans des caisses (12), pour utilisation dans la logistique des marchandises, comprenant
• un fond (2) qui présente une face supérieure (3) et une face inférieure (4), une surface d'appui uniforme étant formée sur la face supérieure (3) du fond (2) pour recevoir les marchandises à transporter, en particulier des caisses empilées (12) contenant les marchandises à transporter,
• des roues (5) disposées sous le fond de support (2) pour déplacer l'unité de transport à rouleaux (1),
l'unité de transport à rouleaux (1) comprenant deux sous-unités (1a, 1b) qui présentent chacune une constituant un fond (2a, 2b) formant une surface d'appui, les sous-unités (1a, 1b) étant assemblées par leurs parties constituant un fond (2a, 2b) pour constituer le fond d'installation (2), en particulier sans joint, et sont reliées entre elles de manière amovible, les surfaces d'appui constituant un fond (2a, 2b) formant ensemble la surface d'installation uniforme et au moins trois roues (5) étant disposées sous chacune des constituant un fond (2a, 2b) au moins trois roues (5) sont disposées selon une configuration différente d'un alignement linéaire, **caractérisé par** au moins un premier moyen d'accouplement relié à chacune des unités partielles pouvant être reliées entre elles (1a, 1b), ainsi que par un élément de fixation (8) mobile par rapport aux sous-unités (1a, 1b) le long d'une direction de verrouillage, d'une position de libération à une position de fixation, sur lequel sont prévus des moyens de couplage formés de manière à correspondre aux premiers moyens de couplage et créant, en coopération avec les premiers moyens de couplage, une liaison fixant de manière amovible les deux sous-unités (1a, 1b), les premiers et seconds moyens d'accouplement correspondant les uns aux autres étant formés chacun d'une paire composée d'un tenon de verrouillage (6) et d'un évidement de verrouillage (9), l'évidement de verrouillage (9) présentant une section transversale qui se rétrécit dans la direction de verrouillage.

2. Unité de transport à rouleaux (1) selon la revendication 1, **caractérisée en ce que** les évidements de verrouillage (9) sont en forme de goutte.

3. Unité de transport à rouleaux (1) selon l'une des revendications précédentes, **caractérisée en ce que** l'élément de fixation (8) est une plaque de fixation.

4. Unité de transport à rouleaux (1) selon l'une des revendications précédentes, **caractérisée en ce que** les premiers moyens d'accouplement sont formés comme des tenons de verrouillage (6) et que les seconds moyens d'accouplement sont formés comme des évidements de verrouillage (9).

5. Unité de transport à rouleaux (1) selon l'une des revendications précédentes, **caractérisée en ce que** l'élément de fixation (8) est sollicité par ressort dans la position de fixation.

6. Unité de transport à rouleaux (1) selon l'une des revendications précédentes, **caractérisée en ce que** les sous-unités (1a, 1b) présentent chacune, au niveau des surfaces de butée avec lesquelles elles sont en contact pour constituer le fond de rangement (2), au moins un moyen de centrage (10, 11), les moyens de centrage (10, 11) étant de forme complémentaire et coopérant pour aligner et centrer les sous-unités (1a, 1b) lors de leur assemblage pour constituer le fond de montage (2).

7. Unité de transport à rouleaux (1) selon l'une des revendications précédentes, **caractérisée en ce qu'**elle est composée de deux sous-unités (1a, 1b) avec des surfaces d'appui (2a, 2b) de même taille qui, ensemble, constituent le fond (2).

8. Unité de transport à rouleaux (1) selon l'une des revendications précédentes, **caractérisée par** quatre roues (5) disposées respectivement sous chacune des deux parties constituant un fond (2a, 2b) des sous-unités (1a, 1b).

9. Système pour transporter, transborder et/ou stocker des marchandises, comprenant une unité de transport à rouleaux (1) selon l'une des revendications précédentes, une pluralité de caisses de transport (12) pouvant être posées sur le fond d'installation, ainsi qu'au moins une barre de verrouillage (13) réglable en longueur et pouvant être bloquée à unevlongueur réglée, la barre de verrouillage (13) présentant, à l'une de ses deux extrémités longitudinales, une section d'accouplement (14) pour être reliée à un bord (12a) des caisses de transport (12) et à y être fixée de manière amovible, et l'élément de fixation (8) étant disposé à la deuxième des deux extrémités longitudinales de la barre de verrouillage (13). Système selon la revendication 9, **caractérisé en ce que** l'unité de transport à rouleaux (1) est formée avec les caractéristiques de la revendication 7 et **en ce que** les caisses de transport (12) présentent chacune une surface d'appui (12b) pour être appuyée sur le sol.

10. Système selon la revendication 9, **caractérisé en ce que** l'unité de transport à rouleaux (1) est formée avec les caractéristiques de la revendication 7 et **en ce que** les caisses de transport (12) présentent chacune une surface d'appui qui correspond essentiellement à la surface d'appui des parties constituant un fond (2a, 2b) des sous-unités (1a, 1b).

11. Système selon la revendication 10, **caractérisé en ce que** la partie d'accouplement (14) est formée et conçue pour s'engager simultanément sur les bords (12a) de deux caisses de transport (12) disposées de manière adjacente et reposant chacune sur l'une des parties constituant un fond (2a, 2b).

12. Système selon l'une des revendications 9 à 11, **caractérisé en ce que** les caisses de transport (12) sont des caisses peu encombrantes, telles que des caisses pliantes ou rabattables ou encore des caisses empilables, la partie d'accouplement (14) de la barre de verrouillage (13) étant conçue pour s'engager également sur les structures extérieures des caisses (12) repliées, rabattues ou empilées à l'envers.
